# EUROPEAN PATENT SPECIFICATION

(11) **EP 1 763 565 B1**
(45) Date of publication and mention of the grant of the patent: **12.05.2010**
(21) Application number: 05773191.1
(22) Date of filing: 28.06.2005
(51) Int. Cl.: C09J 123/00, C09J 123/04, C09J 123/10

(54) **ADHESION PROMOTERS FOR MULTISTRUCURAL LAMINATES**
HAFTVERSTÄRKER FÜR MEHRSCHICHTIGE LAMINATE
PROMOTEURS D'ADHERENCE POUR STRATIFIES MULTI-STRUCTURELS

(30) Priority: 28.06.2004 US 583334 P
(43) Date of publication of application: 21.03.2007
(73) Proprietor: DOW GLOBAL TECHNOLOGIES INC., Midland MI 48674 (US)
(72) Inventor: YALVAC, Selim, Pearland, TX 77584 (US); KARJALA, Teresa, P., Lake Jackson, TX 77566 (US); LEVINSON, Michael, J., Mildland, MI 48640 (US); WATSON, Charles, R., Brazoria, TX 77422 (US)
(74) Representative: Hayes, Adrian Chetwynd
(86) International application number: PCT/US2005/022923
(87) International publication number: WO 2006/004750

(56) References cited:
- WO-A-2004/011569
- WO-A-2005/026281
- US-A- 5 302 454
- US-A- 5 368 927
- US-A- 5 478 891
- US-A- 6 153 670
- 'Microthene F FE 532-00', LYONDELL
- 'Microthene F FA 700-00', LYONDELL
- 'EPOLENE E-43P Polymer', [Online] 17 April 2006, Retrieved from the Internet: <URL:www.eastman.com/ProductCatalogApss/Pag eControllers/ProdDatasheet_PC.aspx?Product= 710008>
- 'EPOLENE C-16P Polymer', [Online] Retrieved from the Internet: <URL:www.eastman.com/ProductCatalogApss/Pag eControllers/ProdDatasheet_PC.aspx?Product= 710006>
- 'A-C Polypropylene-Maleic Anhydride Copolymer 597A', HONEYWELL
- 'Properties and Applications Guide for Microthene F Powders', EQUISTAR

## Description

The invention pertains to adhesion promoters for multistructural laminates. The invention provides compositions and methods for improving the adhesion of a film to a nonwoven, a film to another film, or a nonwoven to another nonwoven. Depending on the laminated or multilaminated structure, the improvement can be achieved by either utilizing low viscosity, low density ethylene- or propylene-based polymers, which physically anchor to a substrate, such as a porous nonwoven, or by utilizing a similar polymer in a blend with one of the substrate film polymers to improve flow and adhesion.

Thermoplastic resins have been extruded to form fibers, films and webs for a number of years. The most common thermoplastics for these applications are polyolefins, particularly polypropylene and polyethylene, though each material has its characteristic advantages and disadvantages, vis-à-vis the properties desired in the final products.

Nonwoven fabrics are one type of product which can be made from such polymers, and are useful for a wide variety of applications, such as personal care products, like diapers, feminine hygiene products and incontinence products, infection control products, bandages, surgical drapes, garments and many others. Nonwovens are also used in carpet backing applications. They are generally heat bonded to tufted carpets using extrusion coated polypropylene. The most widely used nonwoven is spunbond polypropylene fabric. The nonwoven fabrics used in these applications are often in the form of laminates having various numbers of layers of meltblown fabric, spunbond fabric and/or films, like spunbond/meltblown/spunbond (SMS) laminates, spunbond/meltblown/meltblown/spunbond (SMMS) laminates, spunbond/film (SF) and spunbond/film/spunbond (SFS) laminates, and even laminates having as many as six or more layers.

These laminates often suffer from poor adhesion between the layers. It is therefore desired to have a nonwoven laminate which maintains its integrity better than current laminates. One way to achieve this goal is through the development of a better lamination adhesive.

Accordingly, in one aspect, the invention is a lamination adhesive, comprising at least 2 components: Component A) comprising at least one propylene-based polymer that has a melt flow rate of between 0.5 to 100 g/10 minutes, tested in accordance with ASTM D1238 condition 230°C/2.16 kg; and Component B) comprising at least one ethylene-based polymer, preferably having a density of between 0.85 and 0.90 g/cc, more preferably between 0.855 and 0.89 g/cc, most preferably between 0.87 and 0.88 g/cc as determined according to ASTM D-792, and a viscosity of between 300 and 50,000 cP, preferably of between 1000 and 30,000 cP, and more preferably of between 5000 and 25,000 cP. Viscosity (generally measured using spindle 31) is determined according to ASTM D 3236 at 177°C (350°F). component A) comprises 60 to 95 percent, preferably 70 to 90 percent, more preferably 70 to 80 percent; and component B) comprises 40 to 5 percent, preferably 30 to 10 percent, more preferably 30 to 20 percent, said percentages are weight percentages based on the combined weight of components A) and B), or based on the weight of all the components of the adhesive.

In another aspect, the invention is a lamination adhesive, comprising at least 2 components: component A) comprising at least one ethylene-based polymer that has a melt index of between 0.5 to 100 g/10 minutes, tested in accordance with ASTM D1238 condition 190°C/2.16 kg; and Component B) comprising at least one ethylene-based polymer, having a density of between 0.85 and 0.90 g/cc, preferably between 0.855 and 0.89 g/cc, most preferably between 0.87 and 0.88 g/cc as determined according to ASTM D-792, and a viscosity of between 300 and 50,000 cP, preferably of between 1000 and 30,000 cP, and more preferably of between 5000 and 25,000 cP. Viscosity is determined according to ASTM D3236 at 177°C (350°F). Component A) is 70 percent, and component B) is 30 percent, said percentages are weight percentages based on the combined weight of components A) and B). ethylene/C3 to C12 α-olefin interpolymers, and most preferably ethylene/C8 α-olefin copolymers.

Even more preferably, at least one ethylene-based polymer comprising component B) is selected from ethylene/C3 to C8 α-olefin interpolymers where the α-olefin is selected from the group consisting of propylene; 1-butene; 2-methyl-1-propene; 1-pentene; 2-memyl-1-butene; 1-hexene; 4-methyl-1-pentene, 1-heptene; and 1-octene.

In yet another aspect, the invention is a lamination adhesive, comprising at least 2 components: Component A) comprising at least one ethylene-based polymer that has a melt index of between 0.5 to 100 g/10 minutes, tested in accordance with ASTM D1238 condition 190°C/2.16 kg; and Component B) comprising at least one propylene-based polymer, having crystallinity of less than 30 percent, preferably less than 25 percent, most preferably less than 20 percent, as determined using DSC, and a melt flow rate, according to ASTM D1238 condition 230°C/2.16 kg, of greater than 25 g/10 minutes; and wherein component A) is 60 to 95 percent, preferably 70 to 90 percent, more preferably 70 to 80 percent; and component B) is 40 to 5 percent, preferably 30 to 10 percent, more preferably 30 to 20 percent, said percentages are weight percentages based on the combined weight of components A) and B), or based on the weight of all the components of the adhesive.

When component A) is at least one propylene-based olefin polymer, it is preferred that this polymer is selected from the group consisting of polypropylene homopolymers and propylene/α-olefin interpolymers, wherein the crystallinity, as determined by DSC, is greater than 30 percent, preferably greater than 35 percent, more preferably greater than 40 percent, most preferably greater than 45 percent of said interpolymers.

In one preferred embodiment, the propylene-base olefin polymer of Component A) is selected from me group consisting of polypropylene homopolymers, and propylene/ethylene interpolymers, wherein the ethylene content comprises not greater than 20, preferably less than **15**, more preferably less than 10, most preferably less than 5 weight percent of said interpolymers.

In another perferred embodiment, the propylene-base olefin polymer of Component A) is selected from the group consisting of polypropylene homopolymers, and propylene/ethylene interpolymers, wherein the ethylene content comprises not greater than 7, preferably less than 5, more preferably less than 3, most preferably less than 2 weight percent of said interpolymers.

Still another aspect of the present invention is a laminate structure employing a lamination adhesive of the invention. Such structures will comprise at least three thermoplastic layers, which are coextruded, thermally bonded, fusion bonded and/or pressure bonded one to another. In one embodiment of the present invention, a laminated structure is disclosed which laminate structure comprises: Layer 1) comprising at least one thermoplastic propylene-based olefin polymer that has a melt flow rate between 0.5 g/10 minutes and 100 g/10 minutes (as measured by ASTM D 1238, Condition 230°C/2.16kg); Layer 3) comprising at least one thermoplastic olefin-based polymer; and Layer 2), positioned between, and in intimate contact with, both Layers 1) and 3), in a bonded fashion, and which comprises a lamination adhesive of the invention; and which laminate structure has increased peel strength when compared to the respective peel strength of an equivalent laminate consisting solely of Layers 1) and 3) positioned in intimate contact with one another in a bonded fashion. In this context, a laminate structure consisting solely of Layers 1) and 3) contains at least Layers 1) and Layer 3), and may contain one or more additional layers, and each additional layer is made of the composition of Layer 1) or Layer 3). The structure of the equivalent laminate should parallel, as closely as possible, the structure of the inventive laminate. The equivalent laminate does not contain the adhesive layer of the inventive laminate.

Another aspect of the invention is directed to a laminate structure comprising a lamination adhesive of any of the compositions of the invention, and comprising at least three thermoplastic layers, and wherein the layers are coextruded, thermally bonded, fusion bonded and/or pressure bonded one to another.

For some applications, it may be advantageous that both Layer 1) and Layer 3) of the laminate contain at least one film-forming, thermoplastic propylene based polymer, which may be the same polymer in both layers. For other applications it may be advantageous that both Layers 1) and Layer 3) comprise a thermoplastic propylene-based polymer, with a melt flow rate between 0.5 g/10 minutes and 100 g/10 minutes, as measured by ASTM D 1238, condition 230°C/2.16kg.

In one preferred embodiment, Component A) of Layer 2) of the laminate, contains at least one propylene-based polymer, which is a propylene homopolymer, having the same viscosity and melt flow rate as that of at least one propylene-based polymer of Layer 1); and Component B) of Layer 2), contains at least one ethylene-based polymer, which is an ethylene/C8 α-olefin copolymer that has a density between 0.87 and 0.88 g/cc, and has a viscosity of between 5,000 and 20,000 cP, as determined according to ASTM D3236 at 177°C (350°F).

The laminate can advantageously be structured such that each of Layers 1) and 3) are film layers. In some applications it may be preferred that one of Layers 1) or 3) is a thermoplastic film layer, and the other is a layer comprising, as its essential element, a non-woven web that is selected from spunbonded, carded thermally bonded staple fiber, meltblown non-woven thermoplastic, air-laid, or combinations thereof.

Alternatively, one of Layers 1) or 3) can be a thermoplastic film layer, and the other can be a layer comprising, as its essential element, a thermoplastic foam.

The Layer 2) of the 3-layer laminates, described herein, may comprise a lamination adhesive of the invention, and in which such a laminate has increased 180° peel strength of at least 25, preferably 50, more preferably 100 percent, when compared to the respective peel strength of an equivalent laminate made solely of Layers 1) and 3). In this context, a laminate structure made solely of Layers 1) and 3) contains at least Layers 1) and Layer 3), and may contain one or more additional layers, and each additional layer is made of the composition of Layer 1) or Layer 3). The structure of the equivalent laminate should parallel, as closely as possible, the structure of the inventive laminate. The equivalent laminate does not contain the adhesive layer of the inventive laminate.

In another embodiment of the present invention, the laminate structure comprises three layers, Layer 1), Layer 2) and Layer 3), and Layer 2) comprises a lamination adhesive of the invention, and the laminate has increased 180° peel strength between Layers 1) and 3) of at least 25, preferably 50, more preferably 100 percent, when compared to the respective peel strength of an equivalent laminate made solely of Layers 1) and 3). In this context, a laminate structure made solely of Layers 1) and 3) contains at least Layers 1) and Layer 3), and may contain one or more additional layers, and each additional layer is made of the composition of Layer 1) or Layer 3). The structure of the equivalent laminate should parallel, as closely as possible, the structure of the inventive laminate. The equivalent laminate does not contain the adhesive layer of the inventive laminate.

In one preferred embodiment, the laminate is formed by extruding Layer 2) between Layer 1) and Layer 3). Preferably, the temperature of the extrudate is near or above the melting temperatures of Layer 1) and Layer 3).

In another preferred embodiment of the invention, the lamination adhesive layer, as used in a tie layer between two substrates, contains a dispersed phase within a polyolefin matrix. The disperse phase may be in the form of discrete particles and/or striations. The particulates and/or striations of the dispersed phase have an average width between 0.05 and 1 µm (micron), including all individual values and subranges there between (as discussed below). Preferably, the particulates and/or striations of the dispersed phase have an average width less than 1 µm (micron), preferably, less than 0.5 µm (micron), and more preferably less than 0.25 µm (micron).

Personal care products, selected from the group consisting of diapers, training pants, absorbent underpants, adult incontinence products, and feminine hygiene products including an outer cover, and which comprise the one or more laminates disclosed herein, are also within the purview of the invention. A film/nonwoven laminate comprising one or more adhesive compositions, as disclosed herein, is also encompassed by the invention.

Any numerical range recited herein, includes all individual values and subranges from the lower value to the upper value, in increments of one unit, provided that there is a separation of at least two units between any lower value and any higher value. As an example, if it is stated that a physical property, such as, for example, molecular weight, melt viscosity, melt index, etc., is from 100 to 1000, it is intended that all individual values, such as 100, 101, 102, etc., and subranges, such as 100 to 144, 155 to 170, 197 to 200, etc., are expressly enumerated in this specification. For values which are less than one, one unit is considered to be 0.0001, 0.001, 0.01 or 0.1, as appropriate. These are only examples of what is specifically intended, and all possible combinations of numerical values between the lowest value and the highest value enumerated, are to be considered to be expressly stated in this application. Numerical ranges have been recited, as discussed herein, in reference to weight percentages of adhesive or blend components, weight percentages of polymer components, melt viscosity, melt flow rate, melt index, percent crystallinity, molecular weight distribution, density, disperse phase dimensions, temperature of extrudate, number of carbon atoms in an α-olefin and other properties.

As used herein, the term "nonwoven fabric or web" means a web having a structure of individual fibers or threads, which are interlaid, but not in an identifiable manner as in a knitted fabric. Nonwoven fabrics or webs have been formed from many processes, such as, for example, melt blowing processes, spunbonding processes, and bonded carded web processes. The basis weight of nonwoven fabrics is usually expressed in ounces of material per square yard (osy) or grams per square meter (gsm), and the fiber diameters useful are usually expressed in microns. (Note that to convert from osy to gsm, multiply osy by 33.91 gsm/osy).

As used herein, the term "microfibers" means small diameter fibers having an average diameter not greater than around 75 µm (microns), for example, having an average diameter from 0.5 µm (microns) to 50 µm (microns) or more particularly, microfibers may have an average diameter of from 2 µm (microns) to 40 µm (microns). Another frequently used expression of fiber diameter is denier, which is defined as "grams per 9000 meters of a fiber." For example, the diameter of a polypropylene fiber, given in µm (microns), may be converted to denier by squaring, and multiplying the result by 0.00629, thus, a 15 µm (micron) polypropylene fiber has a denier of 1.42 (152 × 0.00629 = 1.415).

As used herein, the term "spunbonded fibers" refers to small diameter fibers, which are formed by extruding molten thermoplastic material as filaments from a plurality of fine, usually circular capillaries of a spinnerette, with the diameter of the extruded filaments then being rapidly reduced, as by, for example, in U.S. Pat. No. 4,340,563 to Appel t al., U.S. Pat. No. 3,692,618 to Dorschner et al., U.S. Pat. No. 3,802,817 to Matsuki et al., U.S. Pat. Nos. 3,338,992 and 3,341,394 to Kinney, U.S. Pat. No. 3,502,763 to Hartman, U.S. Pat. No. 3,542,615 to Dobo et al., and U.S. Pat. No. 3,502,538 to Levy. Spunbond fibers are generally not tacky when they are deposited onto a collecting surface. Spunbond fibers are generally continuous and have diameters larger than 7 µm (microns), more particularly, between 10 and 20 µm (microns).

As used herein, the term "meltblown fibers" means fibers formed by extruding a molten thermoplastic material, through a plurality of fine, usually circular, die capillaries, as molten threads or filaments, into a converging high velocity gas (for example air) streams, which attenuate the filaments of molten thermoplastic material to reduce their diameter; such a reduction may be to microfiber diameter. Thereafter, the meltblown fibers are carried by the high velocity gas stream, and are deposited on a collecting surface to form a web of randomly disbursed meltblown fibers. Such a process is disclosed, for example, in U.S. Pat. No. 3,849,241 to Butin. Meltblown fibers are microfibers which may be continuous or discontinuous, and are generally tacky when deposited onto a collecting surface.

As used herein, the term "polymer" generally includes homopolymers, copolymers, and interpolymers, including, but not limited to, block, graft, random and alternating copolymers, terpolymers, etc., and blends and modifications thereof. Furthermore, unless otherwise specifically limited, the term "polymer" shall include all possible geometrical configuration of the material. These configurations include, but are not limited to, isotactic, syndiotactic and random symmetrical.

As used herein, the term "personal care product" means diapers, training pants, absorbent underpants, adult incontinence products, and feminine hygiene products. Such products generally have an outer cover which is liquid penetration resistant, and which also provides a visual barrier, and is aesthetically pleasing. An outer cover for a personal care product, for example, a diaper, may also serve as a "landing area" or point of attachment for tape closure means, and may also provide an attachment means for hook and loop closure systems, wherein the outer cover material may be the hook or the loop means.

The terms "homogeneous" and "homogeneously-branched" are used in reference to an ethylene/α-olefin polymer (or interpolymer), in which the α-olefin comonomer is randomly distributed within a given polymer molecule, and substantially all of the polymer molecules have the same ethylene-to-comonomer ratio.

The homogeneously branched ethylene interpolymers that can be used in the practice of this invention include linear ethylene interpolymers, and substantially linear ethylene interpolymers.

Included amongst the homogeneously branched linear ethylene interpolymers are ethylene polymers, which do not have long chain branching, but do have short chain branches, derived from the comonomer polymerized into the interpolymer, and which are homogeneously distributed, both within the same polymer chain, and between different polymer chains. That is, homogeneously branched linear ethylene interpolymers have an absence of long chain branching, just as is the case for the linear low density polyethylene polymers or linear high density polyethylene polymers, made using uniform branching distribution polymerization processes as described, for example, by Elston in U.S. Patent 3,645,992. Commercial examples of homogeneously branched linear ethylene/α-olefin interpolymers include TAFMER™ polymers supplied by the Mitsui Chemical Company and EXACT™ polymers supplied by ExxonMobil Chemical Company.

The substantially linear ethylene interpolymers used in the present invention are described in U.S. Patent Nos. 5,272,236; 5,278,272; 6,054,544; 6,335,410 and 6,723,810. The substantially linear ethylene interpolymers are those in which the comonomer is randomly distributed within a given interpolymer molecule, and in which substantially all of the interpolymer molecules have the same ethylene/comonomer ratio within that interpolymer.

In addition, the substantially linear ethylene interpolymers are homogeneously branched ethylene polymer having long chain branching. The long chain branches have the same comonomer distribution as the polymer backbone, and can have about the same length as the length of the polymer backbone.

Commercial examples of substantially linear polymers include the ENGAGE^{™} polymers (available from DuPont Dow Elastomers L.L.C.), and AFFINITY^{™} polymers (available from The Dow Chemical Company).

The substantially linear ethylene interpolymers form a unique class of homogeneously branched ethylene polymers. They differ substantially from the well-known class of conventional, homogeneously branched linear ethylene interpolymers, described by Elston in U.S. Patent 3,645,992, and, moreover, they are not in the same class as conventional heterogeneous Ziegler-Natta catalyst polymerized linear ethylene polymers (for example, ultra low density polyethylene (ULDPE), linear low density polyethylene (LLDPE) or high density polyethylene (HDPE) made, for example, using the technique disclosed by Anderson et al., in U.S. Patent 4,076,698); nor are they in the same class as high pressure, free-radical initiated, highly branched polyethylenes, such as, for example, low density polyethylene (LDPE), ethylene-acrylic acid (EAA) copolymers and ethylene vinyl acetate (EVA) copolymers.

The homogeneously branched, substantially linear ethylene interpolymers have excellent processability, even though they have a relatively narrow molecular weight distribution (M_{w}/Mₙ typically less than 3.5, and preferably less than 2.5). Surprisingly, the melt flow ratio (I₁₀/I₂), according to ASTM D 1238, of the substantially linear ethylene interpolymers can be varied widely and essentially independently of the molecular weight distribution. This surprising behavior is contrary to conventional homogeneously branched linear ethylene interpolymers, such as those described, for example, by Elston in U.S. 3,645,992, and heterogeneously branched conventional Ziegler-Natta polymerized linear polyethylene interpolymers, such as those described, for example, by Anderson et al., in U.S. 4,076,698; these polymers have rheological properties that are more influenced by the molecular weight distribution.

Unless otherwise indicated, the physical parameters discussed in the present invention are to be determined according to the following test methods:
Melt Flow Rate (MFR) or Melt Index (MI): The MFR or MI is expressed as the weight of material which flows from a capillary of known dimensions under a specified load or shear rate for a measured period of time, and is measured in grams/10 minutes with a 2.16 kg load at 230°C for polypropylene, or at 190 °C for polyethylene, according to ASTM D1238. For polyethylene polymers, melt indexes are also determined from Brookfield viscosity as described in U.S. Patents Nos. 6,335,410; 6,054,544; 6,723,810. A melt index determined from viscosity as described in these patents is referred to an "apparent melt index."
Melt viscosity is measured in accordance with ASTM D3236 at 177°C (350°F).

Differential Scanning Calorimetry (DSC): DSC is used to measure crystallinity in polypropylene (PP) Polymers and polyethylene (PE) polymers. A sample is pressed into a thin film at a temperatures of 190°C. Around 5 to 8 mg of film sample is weighed and placed in a DSC pan. The lid is crimped on the pan to ensure a closed atmosphere. The sample pan is placed in a DSC cell, and then heated, at a rate of approximately 10°C/min, to a temperature of 23°C for PP (180°C for PE). The sample is kept at this temperature for three minutes. Then the sample is cooled at a rate of 10°C/min to -40°C for PP (-60°C for PE), and kept isothermally at that temperature for three minutes. Consequently, the sample is heated at a rate of 10°C/min until complete melting (second heat). The percent crystallinity is calculated by dividing the heat of fusion (H_{f}), determined from the second heat curse, by a theoretical heat of fusion of 165 J/g, for PP (292 J/g for PE), and multiplying this quantity by 100 (for example, percent cryst. = (H_{f}/ 165 J/g) x 100).

Peel test: In peel or delamination testing, a laminate is tested for the amount of tensile force which will pull apart the layers of the laminate. Values for peel strength are obtained using a specified width of fabric, usually 25.4 mm (one inch), clamp width, and a constant rate of extension. The film is normally conditioned for 40 hours before testing. The fixtures are flat serrated air grips. The sample is delaminated by a sufficient amount to allow it to be clamped into position. The peel test is conducted at a constant crosshead speed of 50.8 mm/minute (2 inchess/minute). The specimen is clamped, for example, in an Instron Model TM, available from the Instron Corporation, 2500 Washington St., Canton, Massachusetts USA. The sample specimen is then pulled apart at a 180° angle of separation, and the tensile strength is recorded in grams.
Figure 1 depicts transmission electron micrographs of a film cross-section, for film composition A, showing the tie layer-PP interface.
Figure 2 depicts transmission electron micrographs of a film cross-section, for film composition A, showing the tie layer-PE interface.
Figure 3 depicts transmission electron micrographs of a film cross-section, for film composition B, showing the tie layer.
Figure 4 depicts transmission electron micrographs of a film cross-section, for film composition B, showing the tie layer-PP interface and the tie layer-PE interface.
Figure 5 depicts transmission electron micrographs of a film cross-section, for film composition C, showing the PE-tie layer-PP interfaces and the tie layer.
Figure 6 depicts transmission electron micrographs of a film cross-section, for film composition C, showing the tie layer-PP interface and tie layer-PE interface.

Thermoplastic polymers are useful in the production of films, fibers and webs for use in a variety of products, such as personal care items, infection control products, garments and protective covers. One example of such a material is a film/nonwoven fabric laminate which functions as a liquid impervious retainer.

A film/nonwoven laminate may be used, for example, as a diaper outer cover material. A diaper outer cover material must perform the function of retaining bodily fluids, and must also be aesthetically pleasing to the eye of the consumer; that is, the material must look attractive to the eye, and must also mask the view of the fluids and materials retained in the diaper. An outer cover for a personal care product, for example, a diaper, may also serve as a "landing area" or point of attachment for tape closure means, and may also provide an attachment means for hook and loop closure systems, wherein the outer cover material may be the hook or the loop means. Such functionality requires that the laminate remain together, without failure under conditions of use, an attribute which has been a problem for prior film/nonwoven laminates.

The inventors have discovered ways to improve the adhesion of a film to a nonwoven, a film to another film, or a nonwoven to another non-woven. Depending on the multilaminate structure, the said improvement could be achieved by either using low viscosity, low density ethylene- or propylene-based polymers, which physically anchor to the porous nonwoven, or by using a similar polymer, in combination with one of the substrate film polymers, as an adhesive layer to improve flow and adhesion.

U.S. Pat. No. 5,302,454 teaches a composition comprising: first, 10-60 weight percent of a homopolymer polypropylene, having an isotactic index greater than 90, or of a crystalline propylene copolymer with ethylene or with a CH₂=CHR olefin, where R is a 2-6 carbon alkyl radical, or combinations thereof, containing more than 85 weight percent of propylene, and having an isotactic index greater than 85; second, 10-40 weight percent of a crystalline polymer fraction containing ethylene and propylene, and having an ethylene content from 52.4 percent to 74.6 percent, and which is insoluble in xylene at room temperature; and third, 30-60 weight percent of an amorphous ethylene-propylene copolymer, containing optionally small proportions of a diene, soluble in xylene at room temperature, and containing 40-70 weight percent of ethylene. The composition has a flex modulus less than 700 MPa, tension set at 75 percent less than 60 percent, tensile stress greater than 6 MPa, and notched IZOD resilience at -20° and -40°C, greater than 600 J/m.

U.S. Pat. No. 5,368,927 teaches a composition comprising: first, 10-60 weight percent of a homopolymer polypropylene, having an isotactic index greater than 80, or of a crystalline propylene copolymer with ethylene and/or an α-olefin having 5-10 carbon atoms, containing more than 85 weight percent of propylene, and having an isotactic index greater than 80; second, 3-25 weight percent of an ethylene-propylene copolymer, insoluble in xylene at room temperature; and third, 15-87 weight percent of a copolymer of ethylene with propylene and/or an α-olefin having 4-10 carbon atoms, and optionally a diene, containing 20-60 percent of ethylene, and completely soluble in xylene at ambient temperature.

The invention also provides additional features, as described herein, in regard to the inventive compositions, and laminated structures prepared therefrom.

Polymers which may be used for the "A" or "B" component include, but are not limited to, block copolymers, such as polyurethanes, copolyether esters, polyamide polyether block copolymers, ethylene/vinyl acetates (EVA), block copolymers having the general formula A-B-C, A-B-A or A-B, for example, copoly(styrene/ethylene-butylene), styrene-poly(ethylene-propylene)-styrene, styrene-poly(ethylene-butylene)-styrene, (polystyrene/poly(ethylene-butylene)/polystyrene, and poly(styrene/ethylene-butylene/styrene).

Other useful resins include block copolymers having the general formula A-B-A'; or A-B, where A and A' are each a thermoplastic polymer endblock, which contains a styrenic moiety, such as a poly (vinyl-areae), and where B is an elastomeric polymer midblock, such as a conjugated diene or a lower alkene polymer. Block copolymers of the A-B-A' type can have different or the same thermoplastic block polymers for the A and A' blocks, and the present block copolymers are intended to embrace linear, branched and radial block copolymers. In this regard, the radial block copolymers may be designated (A-B)ₘ-X, wherein X is a polyfuncotional atom or molecule, and in which each (A-B)ₘ radiates from X in a way that A is an endblock. In the radial block copolymer, X may be an organic or inorganic polyfunctional atom or molecule, and 'm" is an integer having the same value as the functional group originally present in X. Although the value for "m" is not limited, it is usually at least 3, and is frequently 4 or 5. In the present invention, the expression "block copolymer", and particularly, "A-B-A" and "A-B" block copolymer, is intended to embrace all block copolymers having such rubbery blocks and thermoplastic blocks, as discussed above, which can be extruded, and without limitation as to the number of blocks. The film may be formed from, for example, (polystyrene/poly(ethylene-butylene)/polystyrene) block copolymers.

Commercial examples of such copolymers are, for example, those known as KRATON® materials which are available from Kraton Polymers of Houston, Texas, USA. KRATON® block copolymers are available in several different formulations, a number of which are identified in U.S. Pat. Nos. 4,663,220 and 5,304,599.

Polymers composed of an A-B-A-B tetrablock copolymer may also be used in the practice of this invention. Such polymers are discussed in U.S. Pat. No. 5,332,613 (to Taylor et al.). In such polymers, "A" is a thermoplastic polymer block and "B" is an isoprene monomer unit hydrogenated to substantially a poly(ethylenepropylene) monomer unit An example of such a tetrablock copolymer is a styrenepoly(ethylene-propylene)-styrene-poly(ethylene-propylene) or SEPSEP block copolymer available from the Kraton Polymers of Houston, Texas, under the trade designation KRATON® G-1657.

Other exemplary materials which may be used include polyurethane materials, such as, for example, those available under the trademark ESTANE® from B. F. Goodrich & Co., or MORTHANE® from Morton Thiokol Corp., and polyamide polyether block copolymer, such as, for example, PEBAX® polymers available from Atochem Inc. Polymers Division, of Glen Rock, N.J., and polyester materials, such as, for example, those available under the trade designation HYTREL® from E. I. DuPont de Nemours & Company.

Suitable polymers also include copolymers of ethylene and at least one vinyl monomer, such as, for example, vinyl acetates, unsaturated aliphatic monocarboxylic acids, and esters of such monocarboxylic acids. These copolymers are disclosed in, for example, U.S. Pat No. 4,803,117.

Other examples of polymers suitable for use in the "A" or "B" component, include "homogeneous" or "homogeneously branched" polymers prepared using the constrained geometry catalysts, as disclosed in U.S. Patents Nos. 5,064,802; 5,132,380; 5,703,187; 6,034,021; and publications EP 0 468 651 (U.S. 5,321,106), EP 0 514 828 (U.S. 6,118,013), WO 93/19104 (U.S. 5,374,696; U.S. 5,532,394; U.S. 5,723,398), and WO 95/00526 (U.S. 5,470,993; U.S. 5,556,928; U.S. 5,624,878). A suitable class of catalysts used to prepare such polymers is the metallocene catalysts disclosed in U.S. Patents Nos. 5,044,438; 5,057,475; 5,096,867; and 5,324,800.

Other suitable polymers for use in the invention are described in U.S. Patents Nos. 5,272,236; 5,278,272; 6,054,544; 6,335,410 and 6,723,810.

The "A" or "B" components may consist of, or include, a propylene polymer or ethylene polymer, and may also include bi-axially oriented polypropylene ("BOPP"). Other propylene polymers can include VERSIFY ™ polymers, available from The Dow Chemical Company, and VISTAMAXX™ polymers, available from ExxouMobil. Ethylene copolymers can include AFFINITY™ polymers available from the Dow Chemical Company, EXACT™ polymers available from ExxonMobil, and TAFFNER™ polymers available from Mitsui Chemicals. Since the layer of the laminant adhesive can be relatively thick, the majority of opacity may be added to this layer. Opacity may be added through the use of, for example, TiO₂ or CaCO₃. Commercially available opacity increasers are, for example, Techmer's PM 18074 E TiO₂ concentrate and SCC 13602 TiO₂ concentrate (Standridge Chemical Corp.). These concentrates are approximately 70 percent of E.I. DuPont's TiO₂ in a carrier of 30 percent low density polyethylene (LDPE). Other polymers for use in the "A" or "B" Component include LICOCENE^{™} polymers, available from Clariant; EPOLENE^{™} polymers and EASTOFLEX^{™} polymers, available from Eastman Chemicals; REXTAC^{™} polymers, available film Huntsman; and VESTOPLAST^{™} polymers, available from Degussa. Other suitable polymers include semi-crystalline polymers of propylene and an α-olefin as described in U.S. Patent 6,747,114, and propylene/α-olefin waxes as described in U.S. Patent 5,081,322.

Additional examples of polymers for use in the "A" or "B" component include partially crystalline polyolefin homopolymers or copolymers, which are modified free-radically with a silane compound, and have melt viscosities, at 170°C, between 10 and 50,000 mPa·s. Such polymers and their preparation are described in U.S. Patent Application No. 20050043455. Other suitable polymers (polyolefins) are described in U.S. Patent Nos. 5,917,100; 5,750,813; 6,080,902 and 6,107,530.

Other examples of polymers suitable for use in the "A" or "B" component, include homogeneous ultra low molecular weight ethylene polymers, as described in U.S. Patent Nos. 6,335,410, 6,054,544 and 6,723,810. Other suitable polymers include those described in JP1863229 and JP2125641.

Still further examples of polymers that can be used in the "A" or "B" component, include low molecular weight ethylene homopolymers and copolymers, and other α-olefin homopolymers and copolymers, having a total crystallinity from 0 to 30 percent, and a Brookfield viscosity from 500 to 50,000 cP, measured at 177°C (350°F). These polymers and their preparation are described in WO 2004/035680. These polymer systems can be filled with one or more fillers, such as carbon black, alumina trihydrate, calcium carbonate, and other suitable fillers, as described in this reference. Preferred polymers include polyethylene homopolymers, Polypropylene polymers, ethylene/1-octene copolymers and ethylene/propylene copolymers.

Other useful polymers for use in the "A" or "B" component include thermoplastic compositions containing at least one low viscosity, homogeneously branched ethylene polymer, having a density from 0.855 g/cc to 0.899 g/cc, and a Brookfield viscosity of at least 500 cP, at 177°F (350°F). The thermoplastic composition may contain at least 50 wt percent, based on the total weight of the composition, of the thermoplastic polymer. Suitable examples of the thermoplastic polymer include, but are not limited to, synthetic rubbers, linear low density polyethylene (LLDPE), high density polyethylene (HDPE), low density polyethylene (LDPE), ethylene vinyl acetate (EVA) copolymer, polybutadiene and ethylene-propylene-diene. These compositions and their preparation are disclosed in WO 2004/031292.Additional useful polymers for use in component "A" or "B" include polymer blends containing isotatic polypropylene and an α-olefin/propylene copolymer. Examples of such blends and their preparation are disclosed in EP 1 223 191 (U.S. Patent Nos. 6,525,157 and 6,635,715).

Polymers useful in the "A" or "B" component may be added in any amount depending on the final properties and use of the adhesive layer. These polymers may be added from 1 weight percent to 100 weight percent, based on the total amount of the adhesive composition. All individual amounts and subranges between 1 and 100 weight percent are included herein and disclosed herein, as discussed above.

Examples of adhesive compositions or tie layer Compositions, useful in the invention, also include, but are not limited to, the following examples, as listed below in Table 1. The amounts of each component will vary depending on the desired properties and end use of the adhesive or tie layer. Typically, the disperse phase may be added in an amount from 5 weight percent to 45 weight percent or to 50 weight percent, based on the total weight of the tie layer composition. All individual amounts and subranges between 5 weight percent to 50 weight percent are disclosed herein and included herein, as discussed above.

**Table 1: Matrix / Dispersed Phase Combinations**

| Matrix | Dispersed Phase |
|---|---|
| Polypropylene homopolymer, with a melt flow rate between 0.5 to 100 g/10 min (ASTM D1238, 230°C/2.16 kg) | Ethylene/α-olefin polymer, with an apparent melt index greater than 200 g/10 min (ASTM D1238, 190°C/2.16 kg) |
| Propylene/α-olefin polymer, with a melt flow rate between 2 to 25 g/10 min (ASTM D1238, 230°C/2.16 kg) | Ethylene/α-olefin polymer, with an apparent melt index greater than 200 g/10 min (ASTM D1238, 190°C/2.16 kg) |
| Polypropylene homopolymer, with a melt flow rate between 0.5 to 100 g/10 min (ASTM D1238, 230°C/2.16 kg) | Partially crystalline polyolefin homopolymers or copolymers, which are modified free-radically with a silane compound, and have melt viscosities, at 170°C, between 10 and 50,000 mPa·s. |
| Propylene/α-olefin polymer, with a melt flow rate between 2 to 25 g/10 min (ASTM D1238, 230°C/2.16 kg) | Partially crystalline polyolefin homopolymers or copolymers, which are modified free-radically with a silane compound, and have melt viscosities, at 170°C, between 10 and 50,000 mPa·s |
| Polypropylene homopolymer, with a melt flow rate between 0.5 to 100 g/10 min (ASTM D1238, 230°C/2.16 kg) | Propylene/α-olefin polymer, with a melt viscosity, at 190°C, from 50 to 100,000 cP |
| Propylene/α-olefin polymer, with a melt flow rate between 2 to 25 g/10 min (ASTM D1238, 230°C/2.16 kg) | Propylene/α-olefin polymer, with a melt viscosity, at 190°C, from 50 to 100,000 cP |
| Polyethylene copolymer, with a melt flow rate between 0.5 to 100 g/10 min (ASTM D1238, 190°C/2.16 kg) | Propylene/α-olefin polymer, with a melt viscosity, at 190°C, from 50 to 100,000 cP |

For the α-olefin-based copolymers and interpolymers, preferred comonomers include, but are not limited to, ethylene, propylene, isobutylene, 1-butene, 1-pentene, 1-hexene, 3-methyl-1-pentene, 4-methyl-1-pentene, and 1-octene, nonconjugated dienes, polyenes, butadienes, isoprenes, pentadienes, hexadienes (for example, 1,4-hexadiene), octadienes, styrene, halo-substituted styrene, alkyl-substituted styrene, tetrafluoroethylenes, vinylbenzocyclobutene, naphthenics, cycloalkenes (for example, cyclopentene, cyclohexene, cyclooctene), and mixtures thereof. Typically and preferably, the comonomer is a C2-C20 α-olefin. As noted above, all individual values and subranges are included in the C2-C20 range, and are disclosed herein.

In a film composition, for example a three layered film composition (Layers 1), 2) and 3)), as discussed above, is often advantageous that Layer 3) has a lower coefficient of friction than Layer 1) for ease of winding, unwinding and film handling through the production steps, and to convert the film/nonwoven laminate into a final product like a diaper. This may be accomplished by including a large proportion of polypropylene in this layer. Typical polypropylenes which may be used, are Exxon Chemical Company's ESCORENE® polypropylene 3445, or E5D47 (formerly from the Shell Chemical Company).

The various adhesive layers may also have small amounts of additives present to improve processibility, such as low density polyethylene (LDPE), like those available from Quantum Chemical Company under the designation NA 334, or those available from Rexene under the designation 1058 LDPE. Many similar LDPE polymers are commercially available. The adhesives may also contain one or more waxes, one or more tackifying resins and/or one or more oils.

Stabilizer and antioxidants may be added to protect the adhesive composition from degradation, caused by reactions with oxygen, which are induced by such things as heat, light or residual catalyst from the raw materials. Lowering the temperature of application also helps to reduce degradation. Antioxidants are commercially available from Ciba-Geigy located in Hawthorn, N.Y., and include Irganox® 565, 1010 and 1076 which are hindered phenolic antioxidants. These are primary antioxidants which act as free radical scavengers, and may be used alone or in combination with other antioxidants, such as phosphite antioxidants, like Irgafos® 168, available from Ciba-Geigy. Phosphite antioxidants are considered secondary antioxidants, are not generally used alone, and are primarily used as peroxide decomposers. Other available antioxidants include, but are not limited to, Cyanox® LTDP, available from Cytec Industries in Stamford, Conn., and Bthanox® 1330, available from Albemarle Corp. in Baton Rouge, Louisiana. Many other antioxidants are available for use by themselves, or in combination with other such antioxidants. When employed, the antioxidant is typically present in an amount less than 0.5 weight percent, preferably less than 0.2 weight percent, based on the total weight of the adhesive formulation. The adhesive formulations may also contain one or more crosslinking agents.

The adhesives may be prepared by standard melt blending procedures. In particular, the homogeneous ethylene/α-olefin polymer, tackifier(s) and other components may be melt blended under an inert gas blanket, until a homogeneous mix is obtained. Any mixing method producing a homogeneous blend without degrading the adhesive components is satisfactory, such a vessel equipped with a stirrer, and an optional heating mechanism, or an extruder. The blending of the components may take place at room temperature, or at a temperature above or below room temperature, depending on the nature of the components to be blended. The components may also be dry blended prior to being melt blended; for example, the components may be dry blended prior to being fed into the feeder of an extruder.

The nonwoven fabric component of this invention is preferably a spunbond material, and preferably between 11 gsm to 34 gsm (0.3 to 1 osy). The polymers which may be used to produce the spunbond component are thermoplastic polymers, such as polyolefins, polyamides, and polyesters, preferably polyolefins, and still more preferably a blend including a heterophasic polymer in an amount up to 50 weight percent. Mote particularly, the nonwoven fabric may be comprised of a blend of polypropylene, like Exxon Chemical Company's ESCORENE® polypropylene 3445, or E5D47 (formerly from the Shell Chemical Company), and 40 weight percent of a heterophasic polymer like CATAIZOY® polymer KS-057P. Still more particularly, the nonwoven fabric may be comprised of a blend of high crystalline polypropylene and 20 weight percent CATALLOY® polymer KS-057P.

The nonwoven component and the film component are bonded together using thermal point bonding preferably after the film is stretched approximately 60 to 65 percent in the machine direction. This stretching and joining may be performed according to U.S. patent application Ser. No. 07/997,800 and European Patent Application EP 0604731 A1 (based on Application number 931174262). Briefly, this procedure involves extending a first extensible layer from an original length to an expanded length, with the expanded length being at least 5 percent greater than the original length.

Depending upon the degree of stretching, the first extensible layer may be permanently deformed. Next, a second layer of material is placed in juxtaposition with the first layer, while the first layer is still in the expanded length, and the two layers are then attached to one another at a plurality of spaced-apart bond sites, to form the laminates, which includes a plurality of bonded and unbonded areas. Once the laminate has been formes, the first layer is allowed to relax to a third length, which is usually longer than the first length of the first layer. As a result of the attachment of the second layer to the first layer, while the first layer is in an expanded state, once the laminate contracts, the first layer gathers and puckers, thereby forming a much bulkier material as compared to a simple non-stretched laminate of the same two materials.

Generally, stretching is performed by winding the film around a number of rollers, with later rollers running at a higher speed than that of earlier rollers, resulting in a stretching and thinning of the film. Such stretching may reduce the film thickness by a third or more. For example, a film according to this invention may be produced which has a thickness of 15.24 µm (0.6 mil) prior to stretching and 10.16 µm (0.4 mil) after stretching.

In addition, a compatible tackifying resin may be added to the extrudable compositions described above to provide tackified materials that autogenously bond. Any tackifier resin can be used which is compatible with the polymers, and can withstand the high processing (for example, extrusion) temperatures. If the polymer is blended with processing aids, such as, for example, polyolefins or extending oils, the tackifier resin should also be compatible with those processing aids. Generally, hydrogenated hydrocarbon resins are preferred tackifying resins, because of their better temperature stability. REGALREZ™ and ARKON™ P series tackifiers are examples of hydrogenated hydrocarbon resins. REGALREZ™ hydrocarbon resins are available from Hercules Incorporated. ARKON™ P series resins are available from Arakawa Chemical (U.S.A.) Incorporated. The tackifying resins, such as disclosed in U.S. Pat. No. 4,787,699 are suitable for the invention. Other tackifying resins, which are compatible with the other components of the composition and can withstand the high processing temperatures, can also be used.

The nonwoven component of the laminates of the invention may be produced by the meltblowing or spunbonding processes which are well known in the art. These processes generally use an extruder to supply melted thermoplastic polymer to a spinnerette where the polymer is fiberized to yield fibers, which may be staple length or longer. The fibers are then drawn, usually pneumatically, and deposited on a moving foraminous mat or belt to form the nonwoven fabric. The fibers produced in the spunbond and meltblown processes are microfibers as defined above.

Unless otherwise stated, all percentages are stated by weight. The following examples are provided for the purpose of illustrating the invention, and are not to be construed as limiting the scope of the invention.

In order to illustrate the advantages of laminates according to this invention, the following Examples and Controls were developed. All laminates were thermally bonded using a 116°C (240°F) pattern roll and a 93°F (200°F) anvil roll.

### Equipment Description:

(3) 6.35 cm (2.5") Egan Davis Standard MAC Extruders
(2) 5.08 cm (2") Egan Davis Standard Mac Extruders DSB 11 Polyethylene Barrier Screws 30:1 L/D Cloeren 5 layer dual plan feedblock Cloeren 91.44 cm (36") Epoch™ III Autogauge 5.1 die (5) Barron weigh hoppers for gravimetric control Electrostatic & Air Jet edge pinners Air knife and Vacunm box 101.6 cm O.D x 101.6 cm (40" O.D. x 40") long primary chill roll (30-40 RMS) 50.8 cm O.D x 101.6 cm (20" O.D. x 40") long secondary chill roll (2-4 RMS) NDC Model 300 Beta transmission gauge sensor Oscillating frame

Two position single turret horizontal winder (50-1000 fpm)

Films were produced, using a "Ziegler-Natta ethylene/1-octene copolymer" (Sample 1) made according to the teachings of US Patent 4,076,698, and a homopolymer polypropylene polymer (Sample 2). These films were tested on the extrusion coater. Due to the design of the equipment, all five extruders were on line at all times. Film one is a monolayer, 0.051 mm (two mil) film made of Sample 1. Film two is a monolayer, 0.051 mm (two mil) film made of Sample 2. Extrusion conditions are shown below in Table 2.

All polymers and resins used in the present examples were treated with one or more stabilizers, for example, antioxidants Irganox™ 1010 and/or Irgafos™ 168, both supplied by Ciba Specialty Chemicals. Typically, polymers are treated with one or more stabilizers before an extrusion or other melt processes.

**Table 2: Extruder Conditions**

| Film 1: | Film 2: |
|---|---|
| Melt temperature: 260°C (500°F) | Melt temperature: 249°C (480°F) |
| Die Temperature: 288°C (550°F) | Die Temperature: 249°C (480°) |
| Line Speed: 61m/min (200 ft/min) | Line Speed: 61m/min (200 ft/min) |
| Output rate: 160 kg/hr (353 lbs/hr) | Output rate: 156 kg/hr (345 lbs/hr) |
| Cast/Chill roll temperature: 21/21°C (70/70°C) | Cast/Chill roll temperature: 21/21°C (70/70°F) |
| Air knife: On @ 152 mm (6") water | Air knife: on @ 152 mm (6") water |
| Vacuum box: Off | Vacunm box: Off |
| Head Pressure: 7586 to 10345 kPa (1100 to 1500 psi) | Head Pressure: 4828 to 6966 kPa (700 to 1010 psi) |
| Gauge Target: 0.051 mm (2 mil) | Gauge Target: 0.051 mm (2 mil) |
| Gauge Actual: 0.0485 mm (1.910 mil) | Gauge Actual: 0.0458 mm (1.805 mil) |
| Standard Deviation: 0.99 µm (0.039 mil) | Standard Deviation: 0.99 µm (0.037 mil) |

### Example 1 - Preparation and Testing of Film Compositions. Each Containing a Tie Layer

Two films, one polyethylene based and one polypropylene based were prepared using a cast film line. Films were as follows: a) Ziegler-Natta produced ethylene/1-octene polymer, having a melt index (ASTM D1238, condition 190°C/2.16 kg) of 4 g/10 minutes and a density (ASTM D 792) of 0.941 g/cc; and b) homopolymer polypropylene having a melt flow rate (ASTM D 1238, condition 230°C/2.16 kg) of 8.8 g/10 mimute. These films were tested on the extrusion coater.

Film 1 is a monolayer, 0.051 mm (two mil) film of the ethylene/1-octene copolymer (Ziegler-Natta produced or ZN-EO), as discussed above.

Film 2 is a monolayer, 0.051 mm (two mil) film of the polypropylene homopolymer (PP), as discussed above.

Sample 1 is an ethylene/1-octene copolymer (ZN-EO), as discussed above.

Sample 2 is a polypropylene homopolymer, as discussed above.

Sample 3 is an ethylene/1-octene copolymer made according to the teachings of U.S. Patents 5,272,236 and 5,278,272 and 5,665,800, and having an apparent melt index of 500 g/10 minutes, a melt viscosity of 17,000 cP at 177°C (350°F), a density of 0.874 g/cc, and M_{w}/Mₙ of 2 to 3.

Sample 4 is an ethylene/1-octene copolymer made according to the teachings of US Patents 5,272,236 and 5,278,272 and 5,665,800, and having an apparent melt index of 1000 g/10 minutes, a melt viscosity of 8,200 cP at 177°C (350°F), a density of 0.87 g/cc, and M_{w}/Mₙ of 2 to 3.

Tie layer blends were formulated as follows.
Blend 1: 10 wt percent Sample 3 and 90 wt percent Sample 2 (PP).
Blend 2: 25 wt percent Sample 3 and 75 wt percent Sample 2 (PP).
Blend 3: 10 wt percent Sample 4 and 90 wt percent Sample 1 (ZN-EO).
Blend 4: 25 wt percent Sample 4 and 75 wt percent Sample 1 (ZN-EO).

These blends were then extruded between the PE (Film 1) film and PP (Film 2) film to act as the tie layer.

The laminating experiments were run on a 7.62 - 1.27 cm (3-1/2") Black Clawson Model 435, 30:1, L/D extruder with 150 HP Eurotherm digital drive system. The die is a Cloeren 76.2 cm (30") EBR III internal deckle (Edge Bead reduction) die. These were mounted on a Black Clawson extrusion coater (BC# L-1946-00). Representative process conditions fot a film composition containing a tie layer with a propylene-based matrix, are as follows: film thickness 0.0254 mm (1 mil); line speed 30.5 m/min (100) fpm) HP 10-15; amps 64-133; melt temp. 259°C (499°F); back pressure 310 to 7117 kPa (45-1032 psi). The lamination processing parameters can be adjusted for changes in the composition of the dispersed phase of the tie layer. The lamination processing parameters will vary depending on the film composition at issue.

During the lamination process, it was critical to maintain the appropriate surface temperature at each film surface to achieve good adhesion between the film interfaces, while maintaining the structural integrity of each film. It is important that the extrudate temperature is near or above the melting temperature of each film in order to achieve molecular entanglements at the interface of each film. Temperatures much higher than the temperature of either film will cause distortions, wrinkling and other surface imperfections. Table 3 provides process conditions for the listed film compositions.

**Table 3: Process conditions for Film Compositions**

| Film Composition | Melt Temp, Before the die °C (F) | Line speed, m/min (fpm) | Chill Roll Temp, °C (°F) | Air, mm (in) | Extruder rpm |
|---|---|---|---|---|---|
| Film 2 (PP)/Blend 3/Film 1 (ZN-EO) | 179 (355) | 23 (75) | 21 (70) | 152 (6) | 21 |
| Film 2 (PP)/Blend 4/Film 1 (ZN-EO) | 180 (356) | 23 (75) | 21 (70) | 152 (6) | 21 |
| Film 2 (PP)/Sample 1 (ZN-EO) / Film 1 (ZN-BO) | 180 (355) | 23 (75) | 21 (70) | 152 (6) | 21 |
| Film 2 (PP)/Blend 1/Film 1 (ZN-EO) | 182 (360) | 23 (75) | 22 (71) | 152 (6) | 21 |
| Film 2 (PP)/Blend 2/Film 1 (ZN-EO) | 181 (358) | 23 (75) | 22 (72) | 152 (6) | 21 |
| Film 2 (PP)/Sample 2 (PP)/Film 1 (ZN-EO) | 181 (357) | 22 (72) | 22 (72) | 152 (6) | 22 |

The melt temperature of the extrudate was selected to melt the resin sufficiently to flow from the die with adequate melt strength, but not to decrease the viscosity of resin to the extent that the resin flowed too quickly, with no melt strength. To achieve this, the following temperature profile was used: Zone 1 -149°C (300°F), Zone 2 -160°C (320°F), Zones 3,4,5,6, adaptor pipes and die -172°C (342°F). The line speed and extruder rpm were adjusted to achieve a 0.025mm (1 mil) tie layer. The chill water temperature was adjusted to adequately quench the extrudate as it passed through the nip. The 152mm (6") air gap is a standard air gap used to achieve proper adhesion of the extrudate to the substrates.

25.4 mm (One inch) wide strips were cut and tested for peel tear strength (the amount of tensile force required to pull apart outside layers connected by tie layer) from the following film compositions, as shown in Table 4. A total often samples were tested from three different sheets, and the averages, reported below, represent the strength of the tie layer adhesion. These results show a marked improvement (greater than 25 percent) in adhesion (average peel value) when the tie layer contained 10 wt percent of Sample 3. A further increase in adhesion (greater than 35 percent) is observed using 25 wt percent of Sample 3 in the tie layer.

**Table 4: Average Peel Values of the Three Layered Films Compositions (10 samples tested)**

| Film Composition | Tie Layer | Average Peel Value g/mm (g/in) (g/mm) | Percent Increase Over Sample 2 |
|---|---|---|---|
| Film 2 (PP) / Sample 2/ Film 2 (ZN-EO) | Sample 2 (homopolypropylene) | 39.0 (991) | NA |
| Film 2 (PP) / Blend 1/ Film 1 (ZN-EO) | Blend 1 (10 percent Sample 3 + 90 percent Sample 2) | 49.1 (1247) | 25.8 |
| Film 2 (PP) / Blend 2/ Film 1 (ZN-EO) | Blend 2 (25 percent Sample 3 + 75 percent Sample 2) | 52.9 (1343) | 35.5 |

### Example 2 - Preparation and Testing of Laminated Nonwovens

Sample 3, as discussed above, Sample 4, as discussed above, and Sample 5 (an ethylene/1-octene copolymer made according to the teachings of US Patents 5,272,236 and 5,278,272 and 5,665,800, and having a melt index of 5 g/10 minutes, a density of 0.87 g/cc, a M_{w}/Mₙ of 2 to 3) were each used, individually, to bond two polypropylene (PP) nonwoven substrates (or webs). The extruder was the same extruder used in the Example 1, above. Sample 4 was extruded at 82°C (180°F), whereas Samples 3 and 5 were extruded at 102°C (215°F) and 171°C (340°F), respectively.

After the nonwoven webs were laminated using the polymers identified above, 25.4 mm (one inch) wide strips were cut and tested at 50.8 mm/min (2 inches/min) test speed for peel tear strength. Results are tabulated below in Table 5.

**Table 5: Average Peel Values for the Nonwovens (3 samples tested)**

| Tie Layer | Average Peel Value g/mm (g/in) |
|---|---|
| Sample 4 | Very high, tab failure |
| Sample 3 | 15.2 (386) |
| Sample 5 | 16.9 (428) |

The laminated nonwovens had high peel values, and thus, provide an important advance in the technology of personal care products, and will produce more durable and aesthetically pleasing products for the consumer.

### Example 3 - Transmission Electron Microscopy (TEM) of Film Compositions, Each Containing a Tie Layer

Three film compositions, as shown below in Table 6, were examined by transmission electron microscopy (PP = polypropylene and PE = polyethylene).

Samples were prepared for TEM by trimming the center of injection molded plaques, so that sections could be collected at the core. Block faces were cryopolished and stained with RuO4 vapors for three hours at ambient temperature. Sections of approximately 100 nm in thickness were collected using a diamond knife at ambient temperature on a Leica Ultracut T microtome. The sections were placed on 400 mesh virgin copper grids. Bright field TEM imaging was used on a JEOL JEM-1230 transmission electron microscope, operated at 100 kV accelerating voltage. Images were captured using Gatan 791 and 794 digital cameras.

**Table 6. Film Compositions Examined by TEM**

| Sample Description | Film Composition |
|---|---|
| PP FILM/ PP homopolymer/ PE FILM | A |
| PP FILM/ Blend 2/ PE FILM | B |
| PP FILM/ Blend 1/ PE FILM | C |

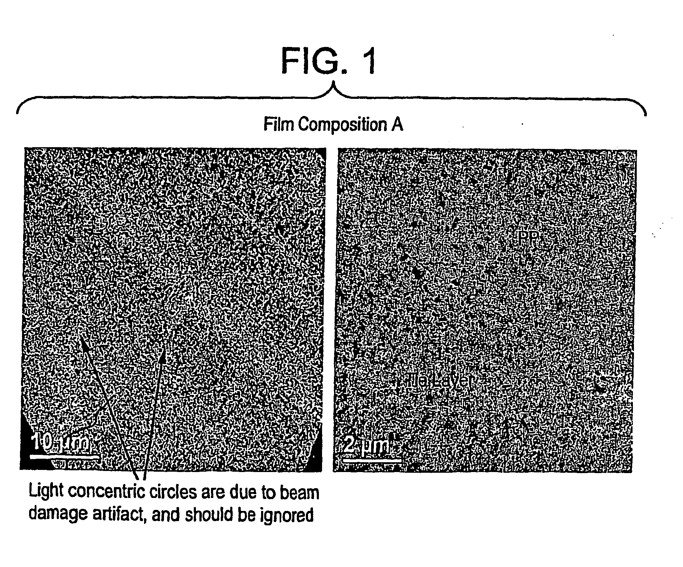

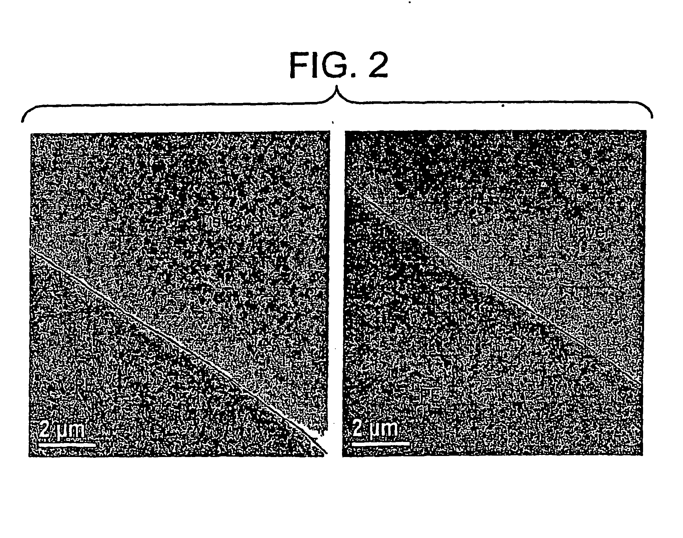

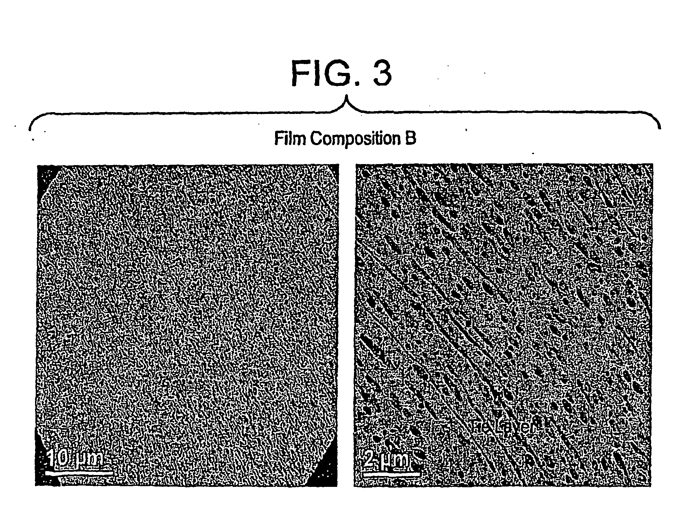

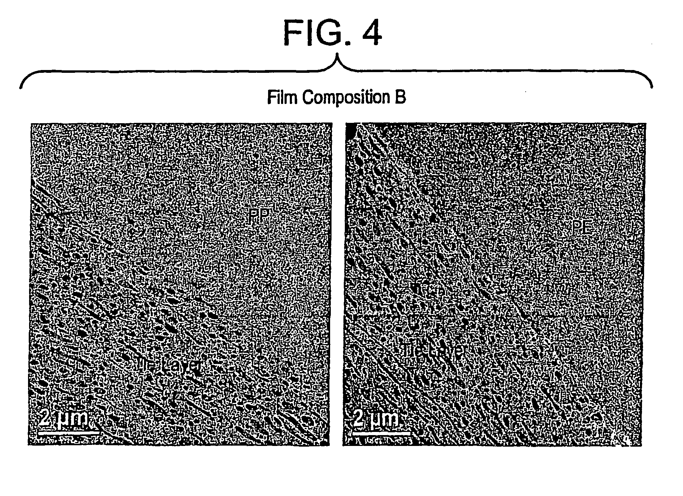

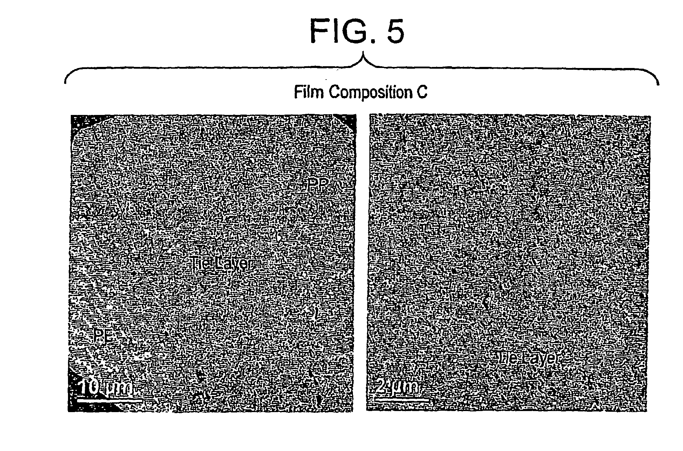

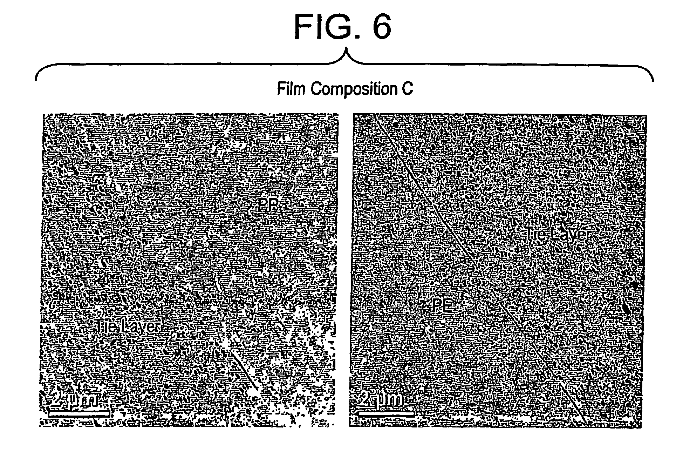

TEM micrographs are shown in Figures 1-6. From the TEM micrographs, no preferential segregation of the dispersed phase (ethylene/1-octene component or rubber phase) was observed in the two tie layers (film composition B and film composition C). In addition, no preferential migration of the dispersed phase to the "tie layer - PE layer" interface was evident in film composition B and film composition C. It is noted that upon exposure to the electron beam, separation at the tie layer-PE layer interface occurred. The dispersed phase in the interior of the tie layer appeared to reside in more elongated/oriented domains, than did the dispersed phase at the interfaces of the PP and PE layers. A good dispersion of the dispersed phase is apparent in both film composition B and film composition C. The dispersions take the form of discrete particulate domains and striated domains. As seen from Figures 3-6, the average width of these domains is less than one micron.

The above film compositions were also analyzed by scanning electron microscopy (SEM). Cavities at the tie layer - PE layer were observed in all three samples; however fewer cavities at the tie layer - PE layer were observed for film composition C. Film composition A contained the largest number of cavities between the tie layer and PE layer when compared to the other two samples. Tears were observed in the tie layer of the B and C film compositions. These tears were attributed to pull out from the tie layer blend material during sample preparation. The above films were also analyzed by transmitted light microscopy (LM). Cavities were observed in all three films.

## Claims

1. A lamination adhesive, comprising at least 2 components:
Component A) which comprises at least one propylene-based polymer that has a malt flow rate from 0.5 to 100 g/10 minutes, measured in accordance with ASTM D1238, condition 230°C/2.16 kg; and
Component B) which comprises at least one ethylene-based polymer, having a density from 0.85 to 0.90 g/cc, and a viscosity of from 300 to 50,000 cP, measured in accordance with ASTM D3236, at 350°F (177°C); and
wherein component A) is 60 to 95 percent, and component B) is 40 to 5 percent, said percentages are weight percentages based on the combined weight of the lamination adhesive. .

2. A lamination adhesive, comprising at least 2 components:
Component A) which comprises at least one ethylene-based polymer that has a melt index from 0.5 to 100 g/10 minutes, measured in accordance with ASTM D1238, condition 190°C/2.16 kg; and
Component B) which comprises at least one ethylene-based polymer, having a density from 0.85 to 0.90 g/cc, as determined according to ASTM D-792, and a viscosity from 300 to 50,000 cP, as viscosity is determined according to ASTM D3236 at 350°F (177°C) and
wherein component A) is 70 percent, and component B) is 30 percent, said percentages are weight percentages based on the combined weight of components A) and B).

3. A lamination adhesive, comprising at least 2 components;
Component A) which comprises at least one ethylene-based polymer that has a melt index of from 0.5 to 100 g/10 minutes, tested in accordance with ASTM D1238 condition 190°C/2.16 kg; and
Component B) which comprises at least one propylene-based polymer, having crystallinity of less than 30 percent, as determined using DSC, a melt flow rate, according to ASTM D1238, condition 230°C/2.16 kg, of greater than 25 g/10 minutes; and
wherein component A) is 60 to 95 percent, and component B) is 40 to 5 percent, said percentages based on the combined weight of components A) and B).

4. The adhesive of Claims 1 or 2, wherein Component B) comprises at least one ethylene-based polymer selected from the group consisting of ethylene/C3 to C20 α-olefin interpolymers.

5. The adhesive of Claims 1 or 2, wherein Component B) comprises at least one ethylene-based polymer selected from the group consisting of ethylene/C3 to C8 α-olefin interpolymers, and wherein the α-olefin is selected from the group consisting of propylene, 1-butene, 2-methyl-1-propene, 1-pentene, 2-methyl-1-butene, 1-hexene, 4-methyl-1-pentene, 1-heptene, and 1-octene.

6. The adhesive of Claim 1, wherein the at least one propylene-based olefin polymer of Component A) is selected from the group consisting of polypropylene homopolymers, and propylene/ethylene interpolymers, and wherein the ethylene content comprises not greater than 20 weight percent of said interpolymers.

7. A laminate structure comprising a lamination adhesive of the composition of any of Claims 1-3, and comprising at least three thermoplastic layers, and wherein the layers are coextruded, thermally bonded, fusion bonded and/or pressure bonded one to another.

8. A laminate structure comprising Layer 1), Layer 2) and Layer 3), and wherein:
Layer 1) comprises at least one thermoplastic propylene-based polymer with a melt flow rate between 0.5 g/10min and 100 g/10min (as measured by ASTM D 1238, condition 230°C/2.16kg);
Layer 3) comprises at least one thermoplastic olefin-based polymer; and
Layer 2), is positioned between, and in intimate contact with, both Layers 1) and 3), in a bonded fashion, and comprises a lamination adhesive of the composition of any of Claims 1-3; and
wherein the laminate structure has increased peel strength when compared to the respective peel strength of an equivalent laminate structure consisting solely of Layers 1) and 3) positioned in intimate contact with one another in a bonded fashion.

9. The laminate of Claim 8, wherein both Layers 1) and Layer 3) comprise a thermoplastic propylene-based polymer, with a melt flow rate between 0.5 g/10 minutes and 100 g/10 minutes (as measured by ASTM D1238, condition 230°C/2.16kg).

10. The laminate of Claim 8, wherein both Layers 1) and Layer 3) are film layers.

11. The laminate of Claim 8, wherein Component A) of Layer 2) is a propylene-based polymer, which is a propylene homopolymer that has the same viscosity and melt flow rate as that of the at least one thermoplastic propylene-based polymer of Layer 1); and Component B) of Layer 2) is an ethylene-based polymer, which is an ethylene/C8 α-olefin copolymer that has a density between 0.87 and 0.88 g/cc, and has a viscosity of between 5,000 and 20,000 cP, as determined according to ASTM D3236 at 350°F (177°C).

12. The laminate of Claim 8, wherein one of Layers 1) or 3) is a thermoplastic film layer and the other is a layer, comprising, as its essential element, a non-woven web that is selected from spunbonded, carded thermally bonded staple fiber, air-laid, meltblown non-woven thermoplastic, or combinations thereof.

13. The laminate of Claim 8, wherein one of Layers 1) or 3) is a thermoplastic film layer, and the other is a layer, comprising, as its essential element, a thermoplastic foam.

14. The laminate of Claims 11, 12 or 13, wherein the laminate has an increased 180° peel strength between Layers 1) and 3) of at least 25 percent, when compared to the respective peel strength of an equivalent laminate made solely of Layers 1) and 3).

15. A laminate structure comprising three layers, Layer 1), Layer 2) and Layer 3), and wherein Layer 2) comprises a lamination adhesive of the composition of any of Claims 1-3, and wherein the laminate has increased 180° peel strength between Layers 1) and 3) of at least 25 percent, when compared to the respective peel strength of an equivalent laminate made solely of Layers 1) and 3).

16. A film/nonwoven laminate, comprising the adhesive composition of any of Claims 1-3.

17. A personal care product, selected from the group consisting of diapers, training pants, absorbent underpants, adult incontinence products, and feminine hygiene products, and wherein said personal care product comprises the laminate of Claim 16.

18. The laminate structure of Claim 8, wherein Layer 2) is a tie layer comprising a dispersed phase within a polyolefin matrix, and wherein the dispersed phase may be in the form of discrete particles and/or striations, and wherein discrete particles and/or striations of the dispersed phase have an average width between 0.05 and 1 micron (µm); and
wherein the disperse phase comprises Component B) and the matrix comprises Component A).

19. The laminate structure of Claim 8, wherein the laminate is formed by extruding Layer 2) between Layer 1 and Layer 3).

20. The laminate structure of Claim 19, wherein, during the extrusion of Layer 2), the temperature of the extrudate is near or above the melting temperatures of Layer 1) and Layer 3).

21. The laminate structure of Claim 20, wherein during the extrusion of Layer 2), the temperature of the extrudate is between 340°F (171°C) to 370°F (188°C), and the extruder operates at 15 to 30 rpm.

22. A laminate adhesive, comprising at least 2 components:
Component A) which comprises at least one ethylene-based polymer that has a melt index from 5 to 100 g/10 minutes, measured in accordance with ASTM D1238, condition 190°C/2.16kg; and
Component B) which comprises at least one ethylene-based polymer, having a density from 0.85 to 0.90 g/cc, as determined according to ASTM D-792, and a viscosity from 300 to 50,000 cP, as viscosity is determined according to ASTM D3236 at 350°F (177°C); and
wherein component A) is 60 to 95 percent, and component B) is 40 to 5 percent, said percentages are weight percentages based on the combined weight of components A) and B).

## Patentansprüche

1. Kaschierklebstoff, der mindestens zwei Komponenten umfasst:
Komponente A), die mindestens ein propylenbasiertes Polymer umfasst, das eine Schmelzflussrate von 0,5 bis 100 g/10 Minuten hat, gemessen nach ASTM D1238, Bedingung 230°C/2,16 kg; und
Komponente B), die mindestens ein ethylenbasiertes Polymer umfasst, das eine Dichte von 0,85 bis 0,90 g/cm³ und eine Viskosität von 300 bis 50.000 cP hat, gemessen nach ASTM D3236 bei 350°F (177°C); und
wobei Komponente A) 60 bis 95 Prozent ausmacht und Komponente B) 40 bis 5 Prozent ausmacht, wobei die Prozentsätze Gewichtsprozent sind, bezogen auf das Gesamtgewicht des Kaschierklebstoffs.

2. Kaschierklebstoff, der mindestens zwei Komponenten umfasst:
Komponente A), die mindestens ein ethylenbasiertes Polymer umfasst, das einen Schmelzindex von 0,5 bis 100 g/10 Minuten hat, gemessen nach ASTM D1238, Bedingung 190°C/2,16 kg; und
Komponente B), die mindestens ein ethylenbasiertes Polymer umfasst, das eine Dichte von 0,85 bis 0,90 g/cm³, ermittelt nach ASTM D-792, und eine Viskosität von 300 bis 50.000 cP hat, als nach ASTM D-3236 bei 350°C (177°C) ermittelte Viskosität; und
wobei Komponente A) 70 Prozent ausmacht und Komponente B) 30 Prozent ausmacht, wobei die Prozentsätze Gewichtsprozent sind, bezogen auf das Gesamtgewicht der Komponenten A) und B).

3. Kaschierklebstoff, der mindestens zwei Komponenten umfasst:
Komponente A), die mindestens ein ethylenbasiertes Polymer umfasst, das einen Schmelzindex von 0,5 bis 100 g/10 Minuten hat, getestet nach ASTM D1238, Bedingung 190°C/2,16 kg; und
Komponente B), die mindestens ein propylenbasiertes Polymer umfasst, mit einer Kristallinität kleiner als 30 Prozent, ermittelt mittels DSK, einer Schmelzflussrate, nach ASTM D1238, Bedingung 230°C/2,16 kg, von größer als 25 g/10 Minuten; und
wobei Komponente A) 60 bis 95 Prozent ausmacht und Komponente B) 40 bis 5 Prozent ausmacht, wobei die Prozentsätze auf das Gesamtgewicht der Komponenten A) und B) bezogen sind.

4. Klebstoff nach Anspruch 1 oder 2, wobei Komponente B) mindestens ein ethylenbasiertes Polymer umfasst, das aus der aus Ethylen/C₃-C₂₀-α-Olefin-Interpolymeren bestehenden Gruppe ausgewählt ist.

5. Klebstoff nach Anspruch 1 oder 2, wobei Komponente B) mindestens ein ethylenbasiertes Polymer umfasst, das aus der aus Ethylen/C₃-C₈-α-Olefin-Interpolymeren bestehenden Gruppe ausgewählt ist, und wobei das α-Olefin aus der aus Propylen, 1-Buten, 2-Methyl-1-propen, 1-Penten, 2-Methyl-1-buten, 1-Hexen, 4-Methyl-1-penten, 1-Hepten und 1-Octen bestehenden Gruppe ausgewählt ist.

6. Klebstoff nach Anspruch 1, wobei das mindestens eine propylenbasierte Olefinpolymer von Komponente A) aus der aus Polypropylenhomopolymeren und Propylen/Ethylen-Interpolymeren bestehenden Gruppe ausgewählt ist, und wobei der Ethylengehalt nicht mehr als 20 Gew.-% der Interpolymere ausmacht.

7. Laminatstruktur, die einen Kaschierklebstoff der Zusammensetzung nach einem der Ansprüche 1-3 umfasst und die mindestens drei thermoplastische Schichten umfasst, und wobei die Schichten miteinander coextrudiert, thermisch verklebt, schmelzverklebt und/oder druckverklebt sind.

8. Laminatstruktur, die Schicht 1), Schicht 2) und Schicht 3) umfasst und wobei:
Schicht 1) mindestens ein thermpolastisches propylenbasiertes Polymer mit einer Schmelzflussrate zwischen 0,5 g/10 min und 100 g/10 min (gemessen nach ASTM D1238, Bedingung 230°C/2,16 kg) umfasst;
Schicht 3) mindestens ein thermoplastisches olefinbasiertes Polymer umfasst; und
Schicht 2) zwischen und in engem Kontakt mit sowohl Schicht 1) als auch Schicht 3), in einer verklebten Weise, positioniert ist und einen Kaschierklebstoff der Zusammensetzung nach einem der Ansprüche 1-3 umfasst; und
wobei die Laminatstruktur eine höhere Ablösefestigkeit besitzt als die jeweilige Ablösefestigkeit einer äquivalenten Laminatstruktur, die nur aus Schicht 1) und Schicht 3) besteht, die in einer verklebten Weise in engem Kontakt miteinander positioniert sind.

9. Laminat nach Anspruch 8, wobei sowohl Schicht 1) als auch Schicht 3) ein thermoplastisches propylenbasiertes Polymer mit einer Schmelzflussrate zwischen 0,5 g/10 Minuten und 100 g/10 Minuten (gemessen nach ASTM D1238, Bedingung 230°C/2,16 kg) umfasst.

10. Laminat nach Anspruch 8, wobei sowohl Schicht 1) als auch Schicht 3) Folienschichten sind.

11. Laminat nach Anspruch 8, wobei Komponente A) von Schicht 2) ein propylenbasiertes Polymer ist, das ein Propylenhomopolymer mit derselben Viskosität und Schmelzflussrate wie das mindestens eine thermoplastische propylenbasierte Polymer von Schicht 1) ist; und Komponente B) von Schicht 2) ein ethylenbasiertes Polymer ist, das ein Ethylen/C₈-α-Olefin-Copolymer ist, das eine Dichte zwischen 0,87 und 0,88 g/cm³ und eine Viskosität zwischen 5000 und 20.000 cP hat, ermittelt nach ASTM D3236 bei 350°F (177°C).

12. Laminat nach Anspruch 8, wobei eine der Schichten 1) oder 3) eine thermoplastische Folienschicht ist und die andere eine Schicht ist, die als wesentliches Element ein Faservlies umfasst, das ausgewählt ist aus Spinnvlies, kardierter, thermisch verklebter Stapelfaser, Blasvlies, schmelzgeblasenem thermoplastischem Vlies oder Kombinationen davon.

13. Laminat nach Anspruch 8, wobei eine der Schichten 1) oder 3) eine thermoplastische Folienschicht ist und die andere eine Schicht ist, die als wesentliches Element einen thermoplastischen Schaumstoff umfasst.

14. Laminat nach Anspruch 11, 12 oder 13, wobei das Laminat eine erhöhte 180°-Ablösefestigkeit zwischen Schicht 1) und Schicht 3) von mindestens 25 Prozent hat, verglichen mit der jeweiligen Ablösefestigkeit eines äquivalenten Laminats, das nur aus den Schichten 1) und 3) besteht.

15. Laminatstruktur, die drei Schichten, nämlich Schicht 1), Schicht 2) und Schicht 3) umfasst, und wobei Schicht 2) einen Kaschierklebstoff der Zusammensetzung nach einem der Ansprüche 1-3 umfasst, und wobei das Laminat eine erhöhte 180°-Ablösefestigkeit zwischen Schicht 1) und Schicht 3) von mindestens 25 Prozent hat, verglichen mit der jeweiligen Ablösefestigkeit eines äquivalenten Laminats, das nur aus den Schichten 1) und 3) besteht.

16. Folie/Vlies-Laminat, das die Klebstoffzusammensetzung nach einem der Ansprüche 1-3 umfasst.

17. Körperpflegeprodukt, das aus der aus Windeln, Erziehungshöschen, saugfähigen Unterhosen, Inkontinenzprodukten für Erwachsene und Damenhygieneprodukten bestehenden Gruppe ausgewählt ist, und wobei das Körperpflegeprodukt das Laminat nach Anspruch 16 umfasst.

18. Laminatstruktur nach Anspruch 8, wobei Schicht 2) eine Verbindungsschicht ist, die eine disperse Phase in einer Polyolefinmatrix umfasst, und wobei die disperse Phase in Form diskreter Partikel und/oder Streifen vorliegen kann, und wobei die diskreten Partikel und/oder Streifen der dispersen Phase eine durchschnittliche Breite zwischen 0,05 und 1 Mikrometer (µm) haben; und
wobei die disperse Phase Komponente B) und die Matrix Komponente A) umfasst.

19. Laminatstruktur nach Anspruch 8, wobei das Laminat durch Extrudieren von Schicht 2) zwischen Schicht 1) und Schicht 3) gebildet wird.

20. Laminatstruktur nach Anspruch 19, wobei während des Extrudierens von Schicht 2) die Temperatur des Extrudats nahe oder über der Schmelztemperatur von Schicht 1) und Schicht 3) liegt.

21. Laminatstruktur nach Anspruch 20, wobei während des Extrudierens von Schicht 2) die Temperatur des Extrudats zwischen 340°F (171°C) und 370°F (188°C) liegt und der Extruder mit 15 bis 30 U/min arbeitet.

22. Kaschierklebstoff, der mindestens 2 Komponenten umfasst:
Komponente A), die mindestens ein ethylenbasiertes Polymer umfasst, das einen Schmelzindex von 5 bis 100 g/10 Minuten hat, gemessen nach ASTM D1238, Bedingung 190°C/2,16 kg; und
Komponente B), die mindestens ein ethylenbasiertes Polymer umfasst, das eine Dichte von 0,85 bis 0,90 g/cm³, ermittelt nach ASTM D-792, und eine Viskosität von 300 bis 50.000 cP hat, als nach ASTM D-3236 bei 350°F (177°C) ermittelte Viskosität; und
wobei Komponente A) 60 bis 95 Prozent ausmacht und Komponente B) 40 bis 5 Prozent ausmacht, wobei die Prozentsätze Gewichtsprozent sind, bezogen auf das Gesamtgewicht der Komponenten A) und B).

## Revendications

1. Adhésif pour stratifié, comprenant au moins deux composants :
- un composant (A), qui comprend au moins un polymère à base de propylène, présentant un indice d'écoulement à l'état fondu, mesuré selon la norme ASTM D-1238, à 230 °C sous 2,16 kg, de 0,5 à 100 g/10 min ;
- et un composant (B), qui comprend au moins un polymère à base d'éthylène présentant une masse volumique de 0,85 à 0,90 g/cm³ et une viscosité, mesurée selon la norme ASTM D-3236, à 177 °C (350 °F), de 300 à 50000 cP ;
et dans lequel adhésif il y a de 60 à 95 % de composant (A) et de 40 à 5 % de composant (B), lesquels pourcentages sont des pourcentages en poids, rapportés au poids total de l'adhésif pour stratifié.

2. Adhésif pour stratifié, comprenant au moins deux composants :
- un composant (A), qui comprend au moins un polymère à base d'éthylène, présentant un indice de fluidité à chaud, mesuré selon la norme ASTM D-1238, à 190 °C sous 2,16 kg, de 0,5 à 100 g/10 min ;
- et un composant (B), qui comprend au moins un polymère à base d'éthylène présentant une masse volumique, mesurée selon la norme ASTM D-792, de 0,85 à 0,90 g/cm³ et une viscosité, mesurée selon la norme ASTM D-3236, à 177 °C (350 °F), de 300 à 50000 cP ;
et dans lequel adhésif il y a 70 % de composant (A) et 30 % de composant (B), lesquels pourcentages sont des pourcentages en poids, rapportés au poids total des composants (A) et (B).

3. Adhésif pour stratifié, comprenant au moins deux composants :
- un composant (A), qui comprend au moins un polymère à base d'éthylène, présentant un indice de fluidité à chaud, mesuré selon la norme ASTM D-1238, à 190 °C sous 2,16 kg, de 0,5 à 100 g/10 min ;
- et un composant (B), qui comprend au moins un polymère à base de propylène, présentant un taux de cristallinité, mesuré par AED (analyse enthalpique différentielle), inférieur à 30 %, et un indice d'écoulement à l'état fondu, mesuré selon la norme ASTM D-1238, à 230 °C sous 2,16 kg, supérieur à 25 g/10 min ;
et dans lequel adhésif il y a de 60 à 95 % de composant (A) et de 40 à 5 % de composant (B), lesquels pourcentages sont des pourcentages en poids, rapportés au poids total des composants (A) et (B).

4. Adhésif conforme à la revendication 1 ou 2, dans lequel le composant (B) comprend au moins un polymère à base d'éthylène choisi dans l'ensemble formé par les interpolymères d'éthylène et d'α-oléfine en C₃₋₂₀.

5. Adhésif conforme à la revendication 1 ou 2, dans lequel le composant (B) comprend au moins un polymère à base d'éthylène choisi dans l'ensemble formé par les interpolymères d'éthylène et d'α-oléfine en C₃₋₈, et pour lequel l'α-oléfine est choisie parmi les suivantes : propylène, but-1-ène, 2-méthyl-prop-1-ène, pent-1-ène, 2-méthyl-but-1-ène, hex-1-ène, 4-méthyl-pent-1-ène, hept-1-ène et oct-1-ène.

6. Adhésif conforme à la revendication 1, dans lequel ledit polymère d'oléfine à base de propylène au nombre d'au moins un du composant (A) est choisi dans l'ensemble constitué par les homopolymères polypropylènes et les interpolymères de propylène et d'éthylène dans lesquels la quantité de motifs dérivés de l'éthylène représente au plus 20 % du poids de ces interpolymères.

7. Structure stratifiée comportant un adhésif pour stratifié, de composition indiquée dans l'une des revendications 1 à 3, et comportant au moins trois couches thermoplastiques, lesquelles couches ont été co-extrudées ou attachées les unes aux autres sous l'action de la chaleur, par fusion et/ou sous l'effet d'une pression.

8. Structure stratifiée comportant une couche (1), une couche (2) et une couche (3), dans laquelle structure :
- la couche (1) comprend au moins un polymère thermoplastique à base de propylène, présentant un indice d'écoulement à l'état fondu, mesuré selon la norme ASTM D-1238, à 230 °C sous 2,16 kg, de 0,5 à 100 g/10 min ;
- la couche (3) comprend au moins un polymère thermoplastique à base d'oléfine(s) ;
- et la couche (2) est placée entre les deux couches (1) et (3), en contact intime avec ces deux couches et attachée à celles-ci, et comprend un adhésif pour stratifié de composition indiquée dans l'une des revendications 1 à 3 ;
et laquelle structure stratifiée présente une résistance au pelage plus forte que celle d'une structure stratifiée équivalente constituée uniquement des couches (1) et (3) placées en contact intime l'une avec l'autre et attachées l'une à l'autre.

9. Stratifié conforme à la revendication 8, dans lequel les deux couches (1) et (3) comprennent un polymère thermoplastique à base de propylène, présentant un indice d'écoulement à l'état fondu, mesuré selon la norme ASTM D-1238, à 230 °C sous 2,16 kg, de 0,5 à 100 g/10 min.

10. Stratifié conforme à la revendication 8, dans lequel les deux couches (1) et (3) sont des films.

11. Stratifié conforme à la revendication 8, dans lequel le composant (A) de la couche (2) est un polymère à base de propylène, qui est un homopolymère de propylène présentant une viscosité et un indice d' écoulement à l'état fondu identiques à ceux dudit polymère thermoplastique à base de propylène de la couche (1), et le composant (B) de la couche (2) est un polymère à base d'éthylène, qui est un copolymère d'éthylène et d'α-oléfine en C₈ présentant une masse volumique de 0,87 à 0,88 g/cm³ et une viscosité, mesurée selon la norme ASTM D-3236, à 177 °C (350 °F), de 5000 à 20000 cP.

12. Stratifié conforme à la revendication 8, dans lequel l'une des couches (1) et (3) est un film thermoplastique et l'autre est une couche comprenant, en tant que composant essentiel, une étoffe non-tissée qui est choisie parmi les non-tissés thermoplastiques obtenus par extrusion, formés de fibres discontinues cardées et attachées sous l'effet de la chaleur, obtenus par procédé aérodynamique ou obtenus par extrusion-soufflage, ou une combinaison de telles étoffes.

13. Stratifié conforme à la revendication 8, dans lequel l'une des couches (1) et (3) est un film thermoplastique et l'autre est une couche comprenant, en tant que composant essentiel, une mousse thermoplastique.

14. Stratifié conforme à la revendication 11, 12 ou 13, lequel stratifié présente une résistance au pelage à 180° entre les couches (1) et (3) plus forte d'au moins 25 % que celle d'un stratifié équivalent formé seulement des couches (1) et (3).

15. Structure stratifiée comportant trois couches, une couche (1), une couche (2) et une couche (3), dans laquelle la couche (2) comprend un adhésif pour stratifié de composition indiquée dans l'une des revendications 1 à 3, et lequel stratifié présente une résistance au pelage à 180° entre les couches (1) et (3) plus forte d'au moins 25 % que celle d'un stratifié équivalent formé seulement des couches (1) et (3).

16. Stratifié film/non-tissé, comprenant une composition d'adhésif conforme à l'une des revendications 1 à 3.

17. Article d'hygiène de la personne, choisi dans l'ensemble formé par les couches absorbantes, slips absorbants pour enfants, slips absorbants pour adultes, articles anti-incontinence pour adultes et articles d'hygiène féminine, lequel article d'hygiène de la personne comprend un stratifié conforme à la revendication 16.

18. Structure stratifiée conforme à la revendication 8, dans laquelle la couche (2) est une couche d'attache qui comprend une phase dispersée au sein d'une matrice en polyoléfine, dans laquelle la phase dispersée peut se trouver sous forme de particules et/ou stries séparées, lesquelles particules et/ou stries séparées de la phase dispersée présentent une taille ou largeur moyenne de 0,05 à 1 µm, et dans laquelle la phase dispersée est constituée par le composant (B) et la matrice est constituée par le composant (A).

19. Structure stratifiée conforme à la revendication 8, lequel stratifié a été formé par extrusion de la couche (2) entre la couche (1) et la couche (3).

20. Structure stratifiée conforme à la revendication 19, pour laquelle, pendant l'extrusion de la couche (2), la température de l'extrudat était proche des points de fusion des couches (1) et (3) ou leur était supérieure.

21. Structure stratifiée conforme à la revendication 20, pour laquelle, pendant l'extrusion de la couche (2), la température de l'extrudat se situait entre 171 et 188 °C (entre 340 et 370 °F), et l'extrudeuse fonctionnait à une vitesse de 15 à 30 t/min.

22. Adhésif pour stratifié, comprenant au moins deux composants :
- un composant (A), qui comprend au moins un polymère à base d'éthylène, présentant un indice de fluidité à chaud, mesuré selon la norme ASTM D-1238, à 190 °C sous 2,16 kg, de 5 à 100 g/10 min ;
- et un composant (B), qui comprend au moins un polymère à base d'éthylène présentant une masse volumique, mesurée selon la norme ASTM D-792, de 0,85 à 0,90 g/cm³ et une viscosité, mesurée selon la norme ASTM D-3236, à 177 °C (350 °F), de 300 à 50000 cP ;
et dans lequel adhésif il y a de 60 à 95 % de composant (A) et de 40 à 5 % de composant (B), lesquels pourcentages sont des pourcentages en poids, rapportés au poids total des composants (A) et (B).
